# EUROPÄISCHE PATENTSCHRIFT

(11) **EP 2 828 029 B1**
(45) Veröffentlichungstag und Bekanntmachung des Hinweises auf die Patenterteilung: **13.04.2016**
(21) Anmeldenummer: 14705174.2
(22) Anmeldetag: 18.02.2014
(51) Int. Cl.: B23K 26/08, B23K 26/38

(54) **VERFAHREN ZUM SCHNEIDEN EINER BLECHPLATINE**
METHOD OF CUTTING BLANKS
MÉTHODE DE DÉCOUPE DE TÔLES

(30) Priorität: 28.02.2013 DE 102013203384
(43) Veröffentlichungstag der Anmeldung: 28.01.2015
(73) Patentinhaber: Schuler Automation GmbH & Co. KG, 91093 Hessdorf (DE)
(72) Erfinder: ERLWEIN, Heinz, 91358 Kunreuth (DE)
(74) Vertreter: Gassner, Wolfgang
(86) Internationale Anmeldenummer: PCT/EP2014/053140
(87) Internationale Veröffentlichungsnummer: WO 2014/131658

(56) Entgegenhaltungen:
- EP-A1- 0 519 391
- WO-A1-2009/105608
- JP-A- S 606 290

## Beschreibung

Die Erfindung betrifft ein Verfahren zum Schneiden einer Blechplatine mit einer vorgegebenen Kontur aus einem kontinuierlich in einer Transportrichtung geförderten Blechband.

Die US 8,253,064 B2 sowie die dazu korrespondierende WO 2009/105608 A1 offenbaren ein Verfahren zum Schneiden von Blechplatinen mit einer vorgegebenen Kontur aus einem kontinuierlich in einer Transportrichtung geförderten Blechband. Zum Schneiden des von einem Coil abgewickelten Blechbands ist stromabwärts einer Haspel eine Laserschneideinrichtung mit mehreren in Transportrichtung sowie in einer senkrecht zur Transportrichtung verlaufenden y-Richtung bewegbaren Laserschneidköpfen vorgesehen. Bei dem bekannten Verfahren wird die Kontur einer Blechplatine mittels der in Transportrichtung aufeinanderfolgend angeordneten Laserschneidköpfe durch mehrere aneinander anschließende Konturteilschnitte hergestellt. Zum Ausgleich von Abweichungen des Blechbands von einer durch die Laserschneideinrichtung definierten Mittellinie werden mittels einer Kamera Markierungen auf dem Blechband erfasst. Daraus wird eine Abweichung der Bandmitte von der Mittellinie ermittelt. Unter Verwendung der ermittelten Abweichung werden die Schneidwege der Laserschneidköpfe mittels eines Steuerprogramms entsprechend korrigiert. - Das Vorsehen von Markierungen auf dem Blechband ist aufwändig. Abgesehen davon können Markierungen in der Praxis vor ihrer Erfassung durch die Kamera beschädigt oder Schmutzablagerungen können fälschlicherweise als Markierungen interpretiert werden. Es kann infolgedessen zu erheblichen Störungen bei der Herstellung der Blechplatinen kommen. Schließlich weisen zwei aufeinanderfolgende Markierungen in Transportrichtung jeweils einen Abstand auf. Die Kamera nimmt separat jede der Markierungen auf. Die Auswertung der von der Kamera erfassten Bilder ist zweitaufwändig. Das bekannte Verfahren ist relativ langsam.

Die JP 2001-105170 A offenbart ein weiteres Verfahren zum Schneiden einer Blechplatine aus einem in einer Transportrichtung geförderten Blechband. Dabei ist stromaufwärts einer Laserschneidvorrichtung ein Sensor zur Erfassung der Lage der Bandkante vorgesehen. Zur Korrektur der Lage der Bandkante wird mit einer geeigneten Steuerung in Abhängigkeit der vom Sensor gelieferten Werte eine stromaufwärts des Sensors vorgesehene Haspel quer zur Transportrichtung des Blechbands bewegt. Zur Bewegung der meistens mehrere Tonnen schweren Haspel ist eine aufwändige Bewegungseinrichtung erforderlich. Das bekannte Verfahren zur Korrektur der Lage der Bandkante ist relativ träge.

Aufgabe der Erfindung ist es, die Nachteile nach dem Stand der Technik zu beseitigen. Es soll insbesondere ein Verfahren angegeben werden, mit dem sicher und zuverlässig Blechplatinen mit einer vorgegebenen Kontur aus einem kontinuierlich geförderten Blechband geschnitten werden können.

Diese Aufgabe wird durch die Merkmale des Anspruchs 1 gelöst. Zweckmäßige Ausgestaltungen der Erfindung ergeben sich aus den Merkmalen der Ansprüche 2 bis 18.

Nach Maßgabe der Erfindung wird ein Verfahren zum Schneiden einer Blechplatine mit einer vorgegebenen Kontur aus einem kontinuierlich in einer Transportrichtung geförderten Blechband mit folgenden Schritten vorgeschlagen:
Bereitstellen zumindest einer Laserschneidvorrichtung mit zumindest einem sowohl in die Transportrichtung als auch in eine senkrecht dazu verlaufende y-Richtung bewegbaren Laserschneidkopf und einer Steuereinrichtung zur Steuerung der Bewegung des Laserschneidkopfs entlang einem zur vorgegebenen Kontur korrespondierenden Schneidweg,
fortlaufendes Messen eines ersten Abstands einer ersten Bandkante des Blechbands von einem festen ersten Messpunkt in y-Richtung mittels einer stromaufwärts der Laserschneidvorrichtung vorgesehenen ersten Abstandsmesseinrichtung,

Übermitteln erster Abstandsmesswerte an die Steuereinrichtung,

Berechnen eines korrigierten Schneidwegs unter Verwendung eines vorgegebenen Schneidwegs und der ersten Abstandsmesswerte mittels eines Steuerprogramms der Steuereinrichtung, und

Erzeugen eines Schnitts im Blechband durch Bewegen des Laserschneidkopfs entlang des korrigierten Schneidwegs.

Erfindungsgemäß wird der erste Abstand der ersten Bandkante fortlaufend gegenüber einem festen ersten Messpunkt in y-Richtung gemessen. Die fortlaufend gemessenen ersten Abstandswerte werden an die Steuereinrichtung übermittelt und dort ausgewertet. Die Lage der Bandkante lässt sich mittels einer Abstandsmesseinrichtung, beispielsweise einer optischen, elektrischen oder taktilen Abstandsmesseinrichtung, sicher und zuverlässig erfassen. Zu diesem Zweck kann die erste Abstandsmesseinrichtung Komponenten umfassen, welche sowohl oberhalb als auch in gegenüberliegender Anordnung unterhalb der Bandkante angeordnet sind. Bei den Komponenten kann es sich beispielsweise um eine Vielzahl sich in y-Richtung erstreckender Lichtschranken oder dgl. handeln. Indem die ersten Abstandswerte fortlaufend, beispielsweise mit einer Frequenz im Bereich von 50 bis 500 Hz, gemessen werden, steht dem Steuerprogramm jederzeit ein aktueller erster Abstandsmesswert zur Verfügung. Damit können Fehler bei der Korrektur des Schneidwegs vermieden werden.

Nach einer vorteilhaften Ausgestaltung wird ein zweiter Abstand einer der ersten Bandkante gegenüberliegenden zweiten Bandkante von einem festen zweiten Messpunkt in y-Richtung mittels einer stromaufwärts der Laserschneidvorrichtung vorgesehenen zweiten Abstandsmesseinrichtung fortlaufend gemessen. Die zweite Abstandsmesseinrichtung ist in y-Richtung zweckmäßigerweise gegenüberliegend der ersten Abstandsmesseinrichtung angeordnet. Unter Verwendung der ersten und der zweiten Abstandsmesswerte kann festgestellt werden, ob sich eine Breite des Blechbands-ändert und/oder welche Breite das Blechband hat.

Zweckmäßigerweise wird der korrigierte Schneidweg also zusätzlich unter Verwendung der zweiten Abstandsmesswerte berechnet. Das ermöglicht eine Korrektur des Schneidwegs mit verbesserter Genauigkeit.

Nach einer weiteren vorteilhaften Ausgestaltung werden aus einer Mehrzahl zeitlich und örtlich aufeinanderfolgender erster und/oder zweiter Abstandswerte jeweils Mittelwerte gebildet und es werden zur Berechnung des korrigierten Schneidwegs die Mittelwerte verwendet. Die Mittelwerte können gleitende Mittelwerte sein. Damit können durch Ausbrüche und/oder Unebenheiten in der jeweiligen Bandkante bedingte Fehler vermieden werden.

Nach einer Alternative der Erfindung wird der Schneidweg vor der Erzeugung des Schnitts im Blechband auf der Grundlage zumindest eines aus den ersten und/oder zweiten Abstandswerten berechneten Mittelwerts korrigiert. D. h. ein vorgegebener Schneidweg kann in einem einfachen Fall der Korrektur entsprechend einer Abweichung des Blechbands von einer Soll-Lage in y-Richtung verschoben werden. Zur Berechnung der Verschiebung des Schneidwegs kann auch ein Mittelwert aus dem ersten und dem zweiten Abstandswert gebildet werden.

Nach einer weiteren Alternative der Erfindung wird der korrigierte Schneidweg während der Erzeugung des Schnitts im Blechband fortlaufend berechnet. Die Berechnung des korrigierten Schneidwegs wird zweckmäßigerweise in Echtzeit durchgeführt. Der Schneidweg ist im Schneidprogramm durch eine Vielzahl aufeinanderfolgender Ortskoordinaten definiert. Bei einer fortlaufenden Korrektur des Schneidwegs werden die dem Laserstrahl vorlaufenden Ortskoordinaten jeweils unter Verwendung des ersten und/oder zweiten Abstandsmesswerts in y-Richtung korrigiert. Bei der Korrektur der Ortskoordinaten wird ein Abstand der ersten und/oder zweiten Abstandsmesseinrichtung von der zu korrigierenden Ortskoordinate in x-Richtung berücksichtigt.

Nach einer weiteren Ausgestaltung der Erfindung wird ein in Transportrichtung zurückgelegter Weg des Blechbands mittels einer stromaufwärts der Laserschneidvorrichtung vorgesehenen Wegmesseinrichtung gemessen. Bei der Wegmesseinrichtung kann es sich beispielsweise ein am Blechband anliegendes Messrad handeln, mit dem ein Weg des Blechbands in Transportrichtung messbar ist. Die Wegmesswerte werden vorteilhafterweise an die Steuereinrichtung übermittelt und es wird mittels des Steuerprogramms der korrigierte Schneidweg unter Verwendung des zur Erzeugung der Kontur vorgegebenen Schneidwegs und der Wegmesswerte berechnet. D. h. unter Verwendung der von der Wegmesseinrichtung gelieferten Wegmesswerte können die Ortskoordinaten des Schneidwegs nicht nur in y-Richtung, sondern auch in x-Richtung korrigiert werden. Damit können beispielsweise Geschwindigkeitsfluktuationen beim Transport des Blechbands durch eine Korrektur des Schneidwegs kompensiert werden. Das ermöglicht eine besonders genaue Herstellung der vorgegebenen Kontur der Blechplatine.

Nach einer weiteren vorteilhaften Ausgestaltung werden die ersten und/oder zweiten Abstands- und Wegmesswerte in einem Abstand von höchstens 2 m, vorzugsweise höchstens 1 m, stromaufwärts der Laserschneidvorrichtung erfasst. Die ersten und/oder zweiten Abstands- und die Wegmesswerte werden nach einer weiteren besonders vorteilhaften Ausgestaltung etwa im selben Abstand in x-Richtung stromaufwärts der Laserschneidvorrichtung erfasst. Das vereinfacht die Berechnung des korrigierten Schneidwegs. Eine zur Berechnung erforderliche Extrapolation kann in diesem Fall auf der Grundlage ein und desselben Abstands der Abstands- und Wegmesseinrichtungen von der Laserschneidvorrichtung durchgeführt werden.

Eine Vorrichtung zum Herstellen der Blechplatinen mit der vorgegebenen Kontur kann eine Haspel zur Aufnahme eines Coils aufweisen. Das Blechband wird vom Coil abgewickelt und mittels einer Transportvorrichtung, beispielsweise einer Walzenrichtmaschine, in Richtung der Laserschneidvorrichtung transportiert. Die Haspel kann in y-Richtung bewegbar sein. Ferner kann eine Regeleinrichtung zur Regelung einer Position der Haspel in y-Richtung vorgesehen sein, derart, dass die Lage des Blechbands bezüglich der Laserschneideinrichtung innerhalb eines vorgegebenen Soll-Lagenbereichs gehalten wird. Der Soll-Lagenbereich kann durch die erste und/oder zweite Abstandsmesseinrichtung erfasst werden. Vorteilhafterweise kann also zumindest einer der ersten und/oder zweiten Abstandswerte als Regelgröße zur Regelung einer y-Position der in y-Richtung bewegbaren Haspel verwendet werden, auf der das Blechband als Coil aufgenommen ist. Damit können unerwünschte Abweichungen des Blechbands von dessen Soll-Lage minimiert werden. Infolgedessen können auch die Abweichungen des Blechbands in y-Richtung im Bereich der ersten und/oder zweiten Abstandsmesseinrichtung gering gehalten werden. Das Ausmaß der Korrektur des Schneidwegs kann damit ebenfalls gering gehalten werden. Das ist von Vorteil, wenn die Korrektur nur innerhalb bestimmter Grenzen möglich ist.

Vorteilhafterweise wird mittels einer dritten Abstandsmesseinrichtung ein dritter Abstand der ersten Bandkante von einem festen dritten Messpunkt in y-Richtung fortlaufend gemessen. Indem ein erster und ein dritter Abstand der ersten Bandkante an in Transportrichtung voneinander verschiedenen ersten und dritten Messpunkten gemessen wird, kann ein Winkel α der ersten Bandkante bezüglich einer Mittellinie bestimmt werden, welche parallel zur Transportrichtung und mittig durch die Laserschneidvorrichtung verläuft. Der Winkel α kann zur Berechnung des korrigierten Schneidwegs verwendet werden. Der Schneidweg kann zur Kompensation einer durch den Winkel α gegebenen Schräglage des Blechbands entsprechend rotiert werden.

Zweckmäßigerweise ist die dritte Abstandsmesseinrichtung im Bereich oder stromaufwärts der Laserschneidvorrichtung angeordnet.

Nach einer Ausgestaltung der Erfindung wird die Kontur mittels mehrerer in Transportrichtung aufeinanderfolgend angeordneter Laserschneidvorrichtungen hergestellt, wobei mit jeder der Laserschneidvorrichtungen jeweils ein Konturteilschnitt erzeugt wird. So kann mittels der Laserschneidvorrichtung ein erster Konturteilschnitt hergestellt werden, wobei mittels einer stromabwärts der Laserschneidvorrichtung vorgesehenen weiteren Laserschneidvorrichtung ein zweiter Konturteilschnitt hergestellt wird, und wobei mittels des Steuerprogramms ein zum zweiten Konturteilschnitt korrespondierender vorgegebener weiterer Schneidweg unter Verwendung zumindest des ersten Abstandswerts so korrigiert wird, dass der weitere Schneidweg in einen Endabschnitt des ersten Schneidweg eingreift. Damit wird sichergestellt, dass auch im Falle einer Korrektur des Schneidwegs ein sich daran anschließender weiterer Schneidweg in den Schneidweg eingreift und damit der erste Konturteilschnitt durch den zweiten Konturteilschnitt ohne Unterbrechung fortgesetzt wird.

Hinsichtlich der Fortsetzung des Schneidwegs durch den weiteren Schneidweg werden zwei Alternativen als vorteilhaft angesehen. Nach einer ersten Alternative werden der Schneidweg und der weitere Schneidweg so korrigiert, dass eine vorgegebene Lage eines Übergabepunkts am Ende des Konturteilschnitts in y-Richtung unverändert bleibt. D. h. in diesem Fall wird der Schneidweg so korrigiert, dass er am vorgegebenen Übergabepunkt endet. Der weitere Schneidweg wird so korrigiert, dass er am vorgegebenen Übergabepunkt beginnt.

Nach einer weiteren Alternative wird der Schneidweg so korrigiert, dass auch ein Übergabepunkt am Ende des Schneidwegs unter Verwendung zumindest des ersten Abstandswerts korrigiert wird. D. h. in diesem Fall bleibt eine vorgegebene Länge des Schneidwegs im Wesentlichen unverändert. Bei der Korrektur des Schneidwegs wird der Übergabepunkt am Ende des Schneidwegs in y-Richtung verschoben.

Nach einer weiteren Ausgestaltung wird/werden die Abstandsmesseinrichtung/en in y-Richtung bezüglich der Bandkante nachgeführt, so dass die Bandkante stets in deren Messbereich sich befindet. Damit kann im Falle einer Abweichung des Blechbands von seiner Soll-Lage jederzeit sichergestellt werden, dass die Bandkante nicht aus dem Messbereich einer Abstandsmesseinrichtung sich entfernt oder mit der Abstandsmesseinrichtung kollidiert.

Nachfolgend werden Ausführungsbeispiele der Erfindung anhand der Zeichnungen näher erläutert. Es zeigen:
- Fig. 1: eine schematische Draufsicht auf ein Blechband mit einer daraus auszuschneidenden Blechplatine,
- Fig. 2: eine schematische Draufsicht auf das Blechband mit darin erzeugten Konturteilschnitten,
- Fig. 3a: eine schematische Draufsicht auf das Blechband, wobei die Konturteilschnitte an festen Übergabepunkten enden,
- Fig. 3b: eine schematische Draufsicht auf das Blechband, wobei die Konturteilschnitte an korrigierten Übergabepunkten enden und
- Fig. 4: eine schematische Draufsicht auf das Blechband mit einer Kontur und einer korrigierten Kontur.

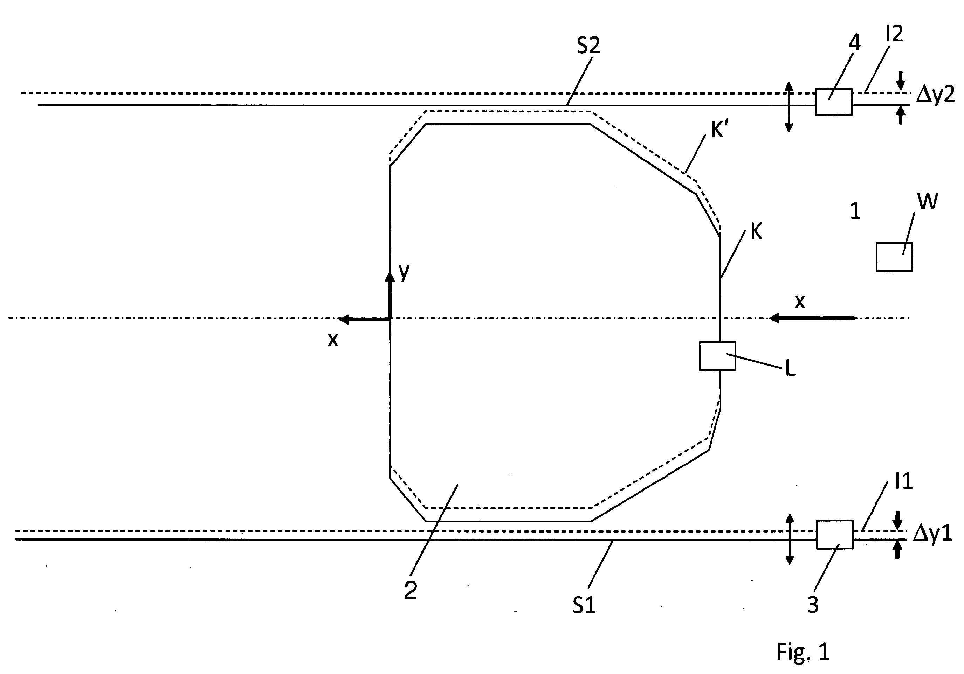

Fig. 1 zeigt schematisch eine Draufsicht auf ein Blechband 1. Mit dem Bezugszeichen K ist eine Kontur einer Blechplatine 2 bezeichnet. Mit dem Bezugszeichen x ist eine Transportrichtung des Blechbands 1 bezeichnet. Zum Transport in die Transportrichtung x wird das Blechband 1 mittels einer Transporteinrichtung (hier nicht gezeigt) kontinuierlich bewegt. Bei der Transporteinrichtung kann es sich beispielsweise um eine Walzenrichtmaschine, ein Transportband oder dgl. handeln.

Eine hier nicht näher gezeigte Laserschneidvorrichtung umfasst einen Laserschneidkopf L, der sowohl in Transportrichtung x als auch in eine senkrecht dazu verlaufende y-Richtung bewegbar ist. Stromaufwärts der Laserschneidvorrichtung ist im Bereich einer Kante des Blechbands 1 eine erste Abstandsmesseinrichtung 3 vorgesehen, mit der ein erster Ist-Abstand 11 der Blechkante gegenüber der einen festen Messpunkt bildenden ersten Abstandsmesseinrichtung in y-Richtung fortlaufend gemessen wird. Mit der durchgezogenen Linie ist eine erste Soll-Lage S1 einer ersten Bandkante des Blechbands 1 bezeichnet. Eine der ersten Soll-Lage S1 gegenüberliegende zweite Soll-Lage einer zweiten Bandkante ist mit dem Bezugszeichen S2 bezeichnet. Im Bereich der zweiten Bandkante ist in y-Richtung gegenüberliegend der ersten Abstandsmesseinrichtung 3 eine zweite Abstandsmesseinrichtung 4 vorgesehen. Die zweite Abstandsmesseinrichtung 4 bildet ebenfalls einen festen Messpunkt. Damit kann ein zweiter Ist-Abstand I2 der zweiten Bandkante des Blechbands 1 gegenüber der zweiten Abstandsmesseinrichtung 4 fortlaufend gemessen werden.

Mit dem Bezugszeichen W ist eine Wegmesseinrichtung bezeichnet, welche stromaufwärts der Laserschneidvorrichtung angeordnet ist. Mit der Wegmesseinrichtung W kann kontinuierlich ein zurückgelegter Weg des Blechbands 1 in Transportrichtung x erfasst werden. Es kann sich dabei beispielsweise um ein am Blechband 1 anliegendes Messrad handeln.

Fig. 1 zeigt die gewünschte Kontur K der Blechplatine 2. Falls das Blechband 1 nicht in Transportrichtung x bewegt würde, würde ein Schneidweg der Laserschneidvorrichtung der gewünschten Kontur K entsprechen.

Beim erfindungsgemäßen Verfahren wird das Blechband 1 allerdings kontinuierlich in Transportrichtung x transportiert. In Abhängigkeit der Transportgeschwindigkeit wird mittels eines Steuerprogramms ein Schneidweg für den Laserschneidkopf L berechnet, welcher die gewünschte Kontur K ergibt. Der Schneidweg hängt insbesondere von der Transportgeschwindigkeit, von der maximalen Bewegungsgeschwindigkeit des Laserschneidkopfs L und von der Kontur K ab.

Im praktischen Betrieb kann es dazu kommen, dass eine Lage des Blechbands 1 von einer durch die erste S1 und die zweite Soll-Lage S2 der Bandkanten definierten Soll-Lage abweicht. Zur Kompensation derartiger Abweichungen von der Soll-Lage wird erfindungsgemäß mittels der ersten Abstandsmesseinrichtung 3 fortlaufend der erste Ist-Abstand 11 der Bandkante gemessen. Die Abstandsmesswerte werden fortlaufend an eine Steuereinrichtung übermittelt. Mittels eines Steuerprogramms der Steuereinrichtung wird daraus ständig eine Abweichung Δy1 der ersten Bandkante von der ersten Soll-Lage S1 berechnet. Unter Verwendung der ersten Abweichung Δy1 wird nun ein Schneidweg für den Laserschneidkopf L so korrigiert, dass eine damit hergestellte weitere Kontur K' in y-Richtung ebenfalls um die erste Abweichung Δy1 verschoben ist.

Nach einer Variante ist es zusätzlich möglich, mittels der zweiten Abstandsmesseinrichtung 4 einen zweiten Ist-Abstand I2 der zweiten Bandkante zu erfassen. Die weiteren Abstandsmesswerte können ebenfalls an die Steuereinrichtung übermittelt werden. Es kann dort eine zweite Abweichung Δy2 ermittelt werden. Mittels des Steuerprogramms kann aus der ersten Δy1 und der zweiten Abweichung Δy2 ein Mittelwert gebildet werden, welcher sodann die Grundlage für die Korrektur des Schneidwegs bilden kann.

Unter Verwendung der von der Wegmesseinrichtung W gelieferten Wegmessewerte können bei der Korrektur des Schneidwegs zusätzlich Fluktuationen in der Transportgeschwindigkeit des Blechbands 1 berücksichtigt werden. D. h. die den Schneidweg definierten Ortskoordinaten können also nicht nur in y-Richtung, sondern unter Verwendung der von der Wegmesseinrichtung W gelieferten Werte auch in x-Richtung korrigiert werden.

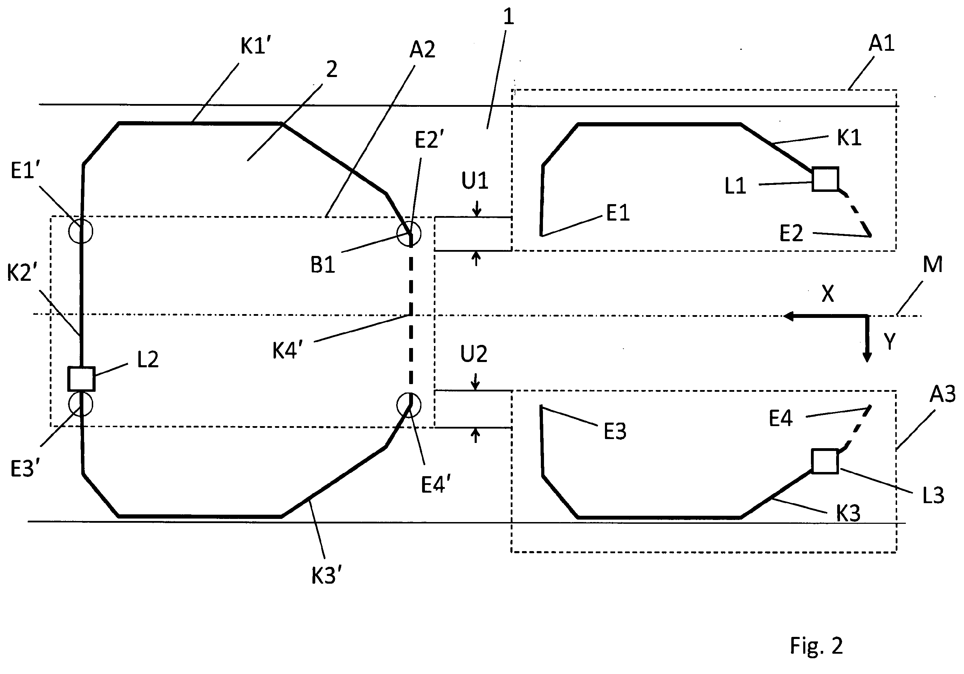

Fig. 2 zeigt schematisch eine Draufsicht auf das Blechband 1 mit darüber in Arbeitsbereichen bewegbaren Laserschneidköpfen. Mit dem Bezugszeichen L1 ist ein erster Laserschneidkopf bezeichnet, welcher in einem ersten Arbeitsbereich A1 sowohl in Transportrichtung x als auch in der senkrecht dazu verlaufenden y-Richtung bewegbar ist.

In Transportrichtung x stromabwärts des ersten Arbeitsbereichs A1 befindet sich ein zweiter Arbeitsbereich A2 eines zweiten Laserschneidkopfs L2. Der zweite Laserschneidkopf L2 ist im zweiten Arbeitsbereich A2 in x- und y-Richtung frei bewegbar. Der erste Arbeitsbereich A1 und der zweite Arbeitsbereich A2 weisen in y-Richtung eine erste Überlappung U1 auf. Der erste A1 und der zweite Arbeitsbereich A2 können auch in x-Richtung überlappen.

Mit dem Bezugszeichen M ist eine Mittellinie der Laserschneidvorrichtung bezeichnet. Die Laserschneidvorrichtung umfasst einen dritten Laserschneidkopf L3, dessen dritter Arbeitsbereich A3 bezüglich der Mittellinie M symmetrisch zum ersten Arbeitsbereich A1 des ersten Laserschneidkopfs L1 angeordnet ist. D. h. der dritte Arbeitsbereich A3 befindet sich stromaufwärts des zweiten Arbeitsbereichs A2. Er weist - ähnlich wie der erste Arbeitsbereich A1 - mit dem zweiten Arbeitsbereich A2 in y-Richtung eine Überlappung U2 auf. Der dritte Arbeitsbereich A3 und der zweite Arbeitsbereich A2 können auch in x-Richtung überlappen.

Zur Herstellung der Blechplatine 2 wird mit dem ersten Laserschneidkopf L1 der erste Konturteilschnitt K1 hergestellt. Simultan dazu kann mit dem dritten Laserschneidkopf L3 ein dritter Konturteilschnitt K3 hergestellt werden. Der erste Konturteilschnitt K1 weist einen ersten Endpunkt E1 und einen zweiten Endpunkt E2 auf. Der dritte Konturteilschnitt K3 weist einen dritten Endpunkt E3 und einen vierten Endpunkt E4 auf. Die entsprechenden Endpunkt des zuvor hergestellten ersten Konturteilschnitts K1' sind mit E1' und mit E2' bezeichnet. Die Endpunkte eines zuvor hergestellten dritten Konturteilschnitts K3' sind mit E3' und E4' bezeichnet.

In Fig. 2 ist mit dem Bezugszeichen K2' ein zweiter Konturteilschnitt und mit dem Bezugszeichen K4' ein vierter Konturteilschnitt bezeichnet, welcher die bereits herstellten ersten K1' und dritten Konturteilschnitte K3' verbinden sollen. Mit dem Bezugszeichen B1 ist ein erster Übergabebereich bezeichnet, welcher sich im zweiten Arbeitsbereich A2 befindet und wie die Arbeitsbereiche A1, A2, A3 stationär ist.

Bedingt durch die kontinuierliche Bewegung des Blechbands 1 in Transportrichtung x werden der ersten Konturteilschnitt K1 und ggf. der dritte Konturteilschnitt K3 aus dem ersten Arbeitsbereich A1 sowie ggf. den dritten Arbeitsbereich A3 in den zweiten Arbeitsbereich A2 bewegt. Sobald das erste Ende E1 in den zweiten Arbeitsbereich A2 eingetreten ist, wird der zweite Laserschneidkopf L2 in den ersten Übergabebereich B1 bewegt. Der zweite Laserschneidkopf L2 greift in den Endabschnitt des ersten Konturteilschnitts K1 ein und beginnt damit, den zweiten Konturteilschnitt K2 herzustellen. Fig. 2 zeigt die Situation kurz vor Beendigung des zweiten Konturteilschnitts K2. Unmittelbar nach der Beendigung des zweiten Konturteilschnitts K2 wird der zweite Laserschneidkopf L2 wieder in den ersten Übergabebereich B1 verfahren, um dann den mit der unterbrochenen Linie angedeuteten vierten Konturteilschnitt K4 herzustellen.

Erfindungsgemäß werden die zu den Konturteilschnitten K1, K2', K3 und K4' korrespondierenden Schneidwege unter Verwendung der ersten Abweichung Δy1 und/oder der zweiten Abweichung Δy2 so korrigiert, dass eine Abweichung der Lage des Blechbands 1 von der Soll-Lage kompensiert wird.

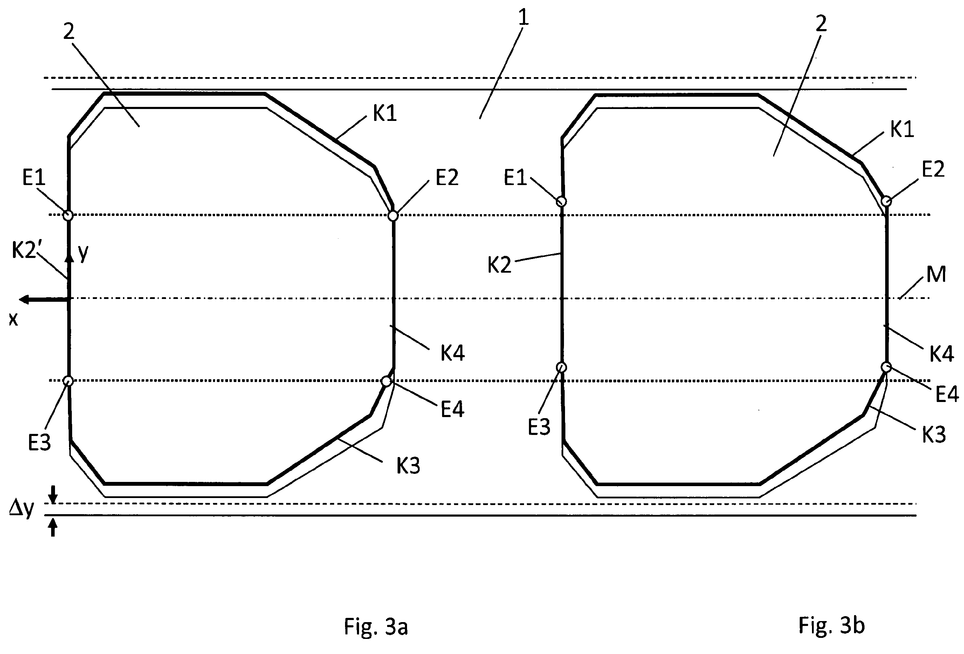

Die Fig. 3a und 3b zeigen Varianten bezüglich der Herstellung einer Kontur aus mehreren Konturteilschnitten. Mit unterbrochenen Linien sind die in y-Richtung um den Betrag Δy verschobenen Bandkanten des Blechbands 1 gezeigt. Mit E1, E2, E3 und E4 sind End- bzw. Übergabepunkte bezeichnet, bei denen Konturteilschnitte K1, K2, K3, K4 beginnen oder enden.

Bei der in Fig. 3a gezeigten ersten Variante bleiben die Übergabepunkte E1, E2, E3, E4 relativ zur Mittellinie M unverändert. D. h. die Verschiebung des Blechbands 1 in y-Richtung wird in diesem Fall durch eine Änderung der Geometrie der Konturteilschnitte K1, K2, K3, K4 kompensiert.

Bei der in Fig. 3b gezeigten zweiten Variante bleiben die Konturteilschnitte K1, K2, K3, K4 in ihrer Geometrie unverändert. Die Konturteilschnitte K1, K2, K3, K4 sind um den Betrag Δy verschoben. Infolgedessen sind auch die Übergabepunkte E1, E2, E3, E4 um den Betrag Δy verschoben.

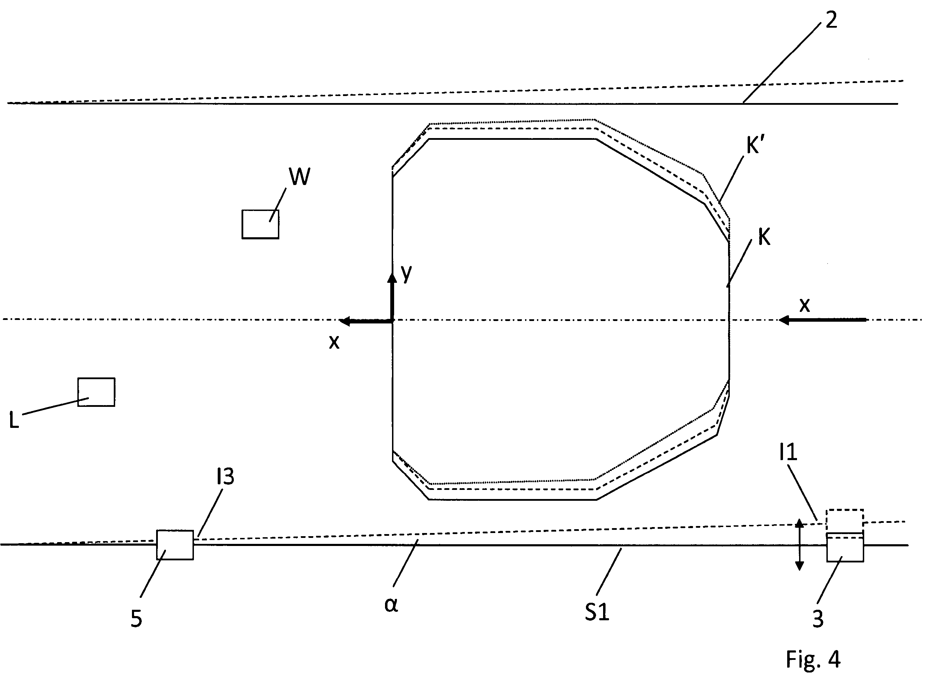

Bei der in Fig. 4 gezeigten Verfahrensvariante ist stromabwärts der ersten Abstandsmesseinrichtung 3 eine dritte Abstandsmesseinrichtung 5 vorgesehen, mit der ein dritter Ist-Abstand I3 der ersten Bandkante des Blechbands 1 gemessen werden kann. Aus einem Vergleich des ersten Ist-Abstands I1 und des dritten Ist-Abstands I3 kann mittels des Steuerprogramms ein Winkel α ermittelt werden, welcher eine Schräglage des Blechbands 1 gegenüber der x-Richtung beschreibt. Unter Verwendung des Winkels α ist es möglich, die ursprünglich vorgegebene Lage der Kontur K nicht nur in y-Richtung zu verschieben, sondern auch um den Winkel α zu rotieren. Es ergibt sich in diesem Fall die mit der punktierten Linie gezeigte korrigierte Kontur K'.

### Bezugszeichenliste

- 1: Blechband
- 2: Blechplatine
- 3: erste Abstandsmesseinrichtung
- 4: zweite Abstandsmesseinrichtung
- 5: dritte Abstandsmesseinrichtung

- A1: erster Arbeitsbereich
- A2: zweiter Arbeitsbereich
- A3: dritter Arbeitsbereich
- E1: erster Übergabepunkt
- E2: zweiter Übergabepunkt
- E3: dritter Übergabepunkt
- E4: vierter Übergabepunkt
- I1: erster Ist-Abstand
- I2: zweiter Ist-Abstand
- I3: dritter Ist-Abstand
- K: Kontur
- K1: erster Konturteilschnitt
- K2: zweiter Konturteilschnitt
- K3: dritter Konturteilschnitt
- K4: vierter Konturteilschnitt
- L: Laserschneidkopf
- L1: erster Laserschneidkopf
- L2: zweiter Laserschneidkopf
- L3: dritter Laserschneidkopf
- M: Mittellinie
- S1: erste Soll-Lage der Bandkante
- S2: zweite Soll-Lage der Bandkante
- U1: erster Überlappungsbereich
- U2: zweiter Überlappungsbereich
- U3: dritter Überlappungsbereich
- U4: vierter Überlappungsbereich
- W: Wegmesseinrichtung
- x: Transportrichtung
- α: Winkel der Bandkante
- Δy1: erste Abweichung
- Δy2: zweite Abweichung
- Δy: Abweichung in y-Richtung

## Patentansprüche

1. Verfahren zum Schneiden einer Blechplatine (2) mit einer vorgegebenen Kontur (K) aus einem kontinuierlich in einer Transportrichtung (x) geförderten Blechband (1) mit folgendem Schritt:
Bereitstellen zumindest einer Laserschneidvorrichtung mit zumindest einem sowohl in die Transportrichtung (x) als auch in eine senkrecht dazu verlaufende y-Richtung bewegbaren Laserschneidkopf (L, L1, L2, L3) und einer Steuereinrichtung zur Steuerung der Bewegung des Laserschneidkopfs (L, L1, L2, L3) entlang einem zur vorgegebenen Kontur (K) korrespondierenden Schneidweg, und
**gekennzeichnet durch** die folgenden Schritte:
fortlaufendes Messen eines ersten Abstands (I1) einer ersten Bandkante des Blechbands (1) von einem festen ersten Messpunkt in y-Richtung mittels einer stromaufwärts der Laserschneidvorrichtung vorgesehenen ersten Abstandsmesseinrichtung (3),
Übermitteln erster Abstandsmesswerte an die Steuereinrichtung,
Berechnen eines korrigierten Schneidwegs unter Verwendung eines vorgegebenen Schneidwegs und der ersten Abstandsmesswerte mittels eines Steuerprogramms der Steuereinrichtung, und
Erzeugen eines Schnitts im Blechband (1) **durch** Bewegen des Laserschneidkopfs (L, L1, L2, L3) entlang des korrigierten Schneidwegs.

2. Verfahren nach Anspruch 1, wobei ein zweiter Abstand (I2) einer der ersten Bandkante gegenüberliegenden zweiten Bandkante von einem festen zweiten Messpunkt in y-Richtung mittels einer stromaufwärts der Laserschneidvorrichtung vorgesehenen zweiten Abstandsmesseinrichtung (4) fortlaufend gemessen wird.

3. Verfahren nach einem der vorhergehenden Ansprüche, wobei der korrigierte Schneidweg zusätzlich unter Verwendung der zweiten Abstandsmesswerte (12) berechnet wird.

4. Verfahren nach einem der vorhergehenden Ansprüche, wobei aus einer Mehrzahl zeitlich oder örtlich aufeinanderfolgender der erster (I1) und/oder zweiter Abstandsmesswerte jeweils zumindest ein Mittelwert gebildet und zur Berechnung des korrigierten Schneidwegs die Mittelwerte verwendet werden.

5. Verfahren nach einem der vorhergehenden Ansprüche, wobei der Schneidweg vor der Erzeugung des Schnitts im Blechband (1) auf der Grundlage zumindest eines aus den ersten und/oder zweiten Abstandsmesswerten berechneten Mittelwerts korrigiert wird.

6. Verfahren nach einem der vorhergehenden Ansprüche, wobei der korrigierte Schneidweg während der Erzeugung des Schnitts im Blechband (1) fortlaufend berechnet wird.

7. Verfahren nach einem der vorhergehenden Ansprüche, wobei die Berechnung des korrigierten Schneidwegs in Echtzeit durchgeführt wird.

8. Verfahren nach einem der vorhergehenden Ansprüche, wobei fortlaufend ein in Transportrichtung (x) zurückgelegter Weg des Blechbands (1) mittels einer stromaufwärts der Laserschneidvorrichtung vorgesehenen Wegmesseinrichtung (W) gemessen wird.

9. Verfahren nach einem der vorhergehenden Ansprüche, wobei die Wegmesswerte an die Steuereinrichtung übermittelt werden und mittels des Steuerprogramms der korrigierte Schneidweg unter Verwendung des zur Erzeugung der Kontur (K) vorgegebenen Schneidwegs und der Wegmesswerte berechnet wird.

10. Verfahren nach einem der vorhergehenden Ansprüche, wobei die ersten und/oder zweiten Abstands- und die Wegmesswerte in einem Abstand von höchsten 2 m, vorzugsweise höchsten 1 m, stromaufwärts der Laserschneidvorrichtung erfasst werden.

11. Verfahren nach einem der vorhergehenden Ansprüche, wobei die ersten und/oder zweiten Abstands- und die Wegmesswerte etwa im selben Abstand stromaufwärts der Laserschneidvorrichtung erfasst werden.

12. Verfahren nach einem der vorhergehenden Ansprüche, wobei zumindest einer der ersten und/oder zweiten Abstandswerte als Regelgröße zur Regelung einer y-Position einer in y-Richtung bewegbaren Haspel verwendet wird, auf der das Blechband (1) als Coil aufgenommen ist.

13. Verfahren nach einem der vorhergehenden Ansprüche, wobei mittels einer dritten Abstandsmesseinrichtung (5) ein dritter Abstand (I3) der ersten Bandkante von einem festen dritten Messpunkt in y-Richtung fortlaufend gemessen wird.

14. Verfahren nach einem der vorhergehenden Ansprüche, wobei die dritte Abstandsmesseinrichtung (5) im Bereich oder stromaufwärts der Laserschneidvorrichtung angeordnet ist.

15. Verfahren nach einem der vorhergehenden Ansprüche, wobei mittels der Laserschneidvorrichtung eine erster Konturteilschnitt (K1) hergestellt wird, wobei mittels einer stromabwärts der Laserschneidvorrichtung vorgesehenen weiteren Laserschneidvorrichtung ein zweiten Konturteilschnitt (K2) hergestellt wird, und wobei mittels des Steuerprogramms ein zum zweiten Konturteilschnitt (K2) korrespondierender vorgegebener weiterer Schneidweg unter Verwendung zumindest des ersten Abstandswerts so korrigiert wird, dass der weitere Schneidweg in einen Endabschnitt des ersten Schneidwegs eingreift.

16. Verfahren nach einem der vorhergehenden Ansprüche, wobei der Schneidweg und der weitere Schneidweg so korrigiert werden, dass eine vorgegebene Lage eines Übergabepunkts (E1, E2, E3, E4) am Ende des ersten Konturteilschnitts (K1) unverändert bleibt.

17. Verfahren nach einem der vorhergehenden Ansprüche, wobei der Schneidweg so korrigiert wird, dass ein Übergabepunkt (E1, E2, E3, E4) am Ende des Schneidwegs unter Verwendung des ersten Abstandswerts korrigiert wird.

18. Verfahren nach einem der vorhergehenden Ansprüche, wobei die Abstandsmesseinrichtung/en (3, 4, 5) in y-Richtung bezüglich der Bandkante nachgeführt wird/werden, so dass die Bandkante stets in deren Messbereich sich befindet.

## Claims

1. A method for cutting a sheet metal blank (2) with a predefined contour (K) from a sheet metal strip (1) conveyed continuously in a direction of transport (x) comprising the following step:
providing at least one laser cutting device having at least one laser cutting head (L, L1, L2, L3) movable both in the direction of transport (x) and in a y-direction running perpendicularly thereto and also having a control arrangement for controlling the movement of the laser cutting head (L, L1, L2, L3) along a cutting path corresponding to the predefined contour (K), and
**characterized in** comprising the following steps:
continuously measuring a first distance (I1) of a first strip edge of the sheet metal strip (1) from a fixed first measurement point in the y-direction by means of a first distance measuring arrangement (3) provided upstream of the laser cutting device,
transmitting first measured distance values to the control arrangement,
calculating a corrected cutting path with use of a predefined cutting path and the first measured distance values by means of a control program of the control arrangement, and
producing a cut in the sheet metal strip (1) by moving the laser cutting head (L, L1, L2, L3) along the corrected cutting path.

2. The method according to Claim 1, wherein a second distance (I2) of a second strip edge opposite the first strip edge from a fixed second measurement point in the y-direction is measured continuously by means of a second distance measuring arrangement (4) provided upstream of the laser cutting device.

3. The method according to one of the preceding claims, wherein the corrected cutting path is additionally calculated with use of the second measured distance values (I2).

4. The method according to one of the preceding claims, wherein at least one average value is formed from a plurality of chronologically or locally successive first (I1) and/or second measured distance values, and the average values are used to calculate the corrected cutting path.

5. The method according to one of the preceding claims, wherein the cutting path is corrected on the basis of at least one average value calculated from the first and/or second measured distance values, prior to the formation of the cut in the sheet metal strip (1).

6. The method according to one of the preceding claims, wherein the corrected cutting path is calculated continuously during the production of the cut in the sheet metal strip (1).

7. The method according to one of the preceding claims, wherein the calculation of the corrected cutting path is performed in real time.

8. The method according to one of the preceding claims, wherein a path covered by the sheet metal strip (1) in the direction of transport (x) is measured continuously by means of a path measuring arrangement (W) provided upstream of the laser cutting device.

9. The method according to one of the preceding claims, wherein the measured path values are transmitted to the control arrangement and the corrected cutting path is calculated by means of the control program with use of the cutting path predefined in order to produce the contour (K) and with use of the measured path values.

10. The method according to one of the preceding claims, wherein the first and/or second measured distance values and the measured path values are detected at a distance of at most 2 m, preferably at most 1 m, upstream of the laser cutting device.

11. The method according to one of the preceding claims, wherein the first and/or second measured distance values and the measured path values are detected approximately at the same distance upstream of the laser cutting device.

12. The method according to one of the preceding claims, wherein at least one of the first and/or second distance values is used as a control variable for controlling a y-position of a reel movable in the y-direction, on which reel the sheet metal strip (1) is received in the form of a coil.

13. The method according to one of the preceding claims, wherein a third distance (I3) of the first strip edge from a fixed third measurement point in the y-direction is measured continuously by means of a third distance measuring arrangement (5).

14. The method according to one of the preceding claims, wherein the third distance measuring arrangement (5) is arranged in the area or upstream of the laser cutting device.

15. The method according to one of the preceding claims, wherein a first partial contour cut (K1) is produced by means of the laser cutting device, wherein a second partial contour cut (K2) is produced by means of a further laser cutting device provided downstream of the laser cutting device, and wherein a predefined further cutting path corresponding to the second partial contour cut (K2) is corrected by means of the control program with use of at least the first distance value, such that the further cutting path steps in an end portion of the first cutting path.

16. The method according to one of the preceding claims, wherein the cutting path and the further cutting path are corrected such that a predefined position of a transfer point (E1, E2, E3, E4) at the end of the first partial contour cut (K1) remains unchanged.

17. The method according to one of the preceding claims, wherein the cutting path is corrected such that a transfer point (E1, E2, E3, E4) at the end of the cutting path is corrected with use with the first distance value.

18. The method according to one of the preceding claims, wherein the distance measuring arrangement/s (3, 4, 5) is/are adjusted in the y-direction with respect to the strip edge, such that the strip edge is always located in the measurement range thereof.

## Revendications

1. Procédé de découpe d'un larget (2) avec un contour prédéfini (K) dans un feuillard (1) défilant en continu dans une direction de transport (x) comprenant l'étape suivante consistant à:
mettre à disposition au moins un dispositif de découpe laser équipé d'au moins une tête de découpe laser (L, L1, L2, L3) mobile tant dans la direction de transport (x) que dans une direction y perpendiculaire à cette dernière et d'un dispositif de commande qui assure la commande du déplacement de la tête de découpe laser (L, L1, L2, L3) le long d'un trajet de coupe correspondant au contour prédéfini (K), et **caractérisé par** les étapes suivantes:
mesure en continu d'une première distance (I1) d'un premier bord du feuillard (1) à partir d'un premier point de mesure fixe dans une direction y à l'aide d'un premier dispositif de mesure de distance (3) prévu en amont du dispositif de découpe laser,
transmission des premières valeurs de distance mesurées au dispositif de commande,
calcul d'un trajet de coupe corrigé en utilisant un trajet de coupe prédéfini et des premières valeurs de distance mesurées à l'aide d'un programme de commande du dispositif de commande, et
réalisation d'une coupe dans le feuillard (1) par déplacement de la tête de découpe laser (L, L1, L2, L3) le long du trajet de coupe corrigé.

2. Procédé selon la revendication 1, en ce qu'une deuxième distance (12) d'un deuxième bord du feuillard opposé au premier bord du feuillard est mesurée en continu à partir d'un deuxième point de mesure fixe dans une direction y à l'aide d'un deuxième dispositif de mesure de distance (4) prévu en amont du dispositif de découpe laser.

3. Procédé selon l'une des revendications précédentes, en ce que le trajet de coupe corrigé est calculé en plus en utilisant les deuxièmes valeurs de distance mesurées (I2).

4. Procédé selon l'une des revendications précédentes, en ce qu'à partir d'une pluralité de premières (I1) et/ou de deuxièmes valeurs de distance mesurées successivement dans le temps ou localement, respectivement au moins une valeur moyenne est formée et les valeurs moyennes sont utilisées pour le calcul du trajet de coupe corrigé.

5. Procédé selon l'une des revendications précédentes, en ce que le trajet de coupe avant la réalisation de la coupe dans le feuillard (1) est corrigé sur la base d'au moins une valeur moyenne calculée à partir des premières et/ou des deuxièmes valeurs de distance mesurées.

6. Procédé selon l'une des revendications précédentes, en ce que le trajet de coupe corrigé est calculé en continu pendant la réalisation de la coupe dans le feuillard (1).

7. Procédé selon l'une des revendications précédentes, en ce que le calcul du trajet de coupe corrigé est effectué en temps réel.

8. Procédé selon l'une des revendications précédentes, en ce qu'un trajet parcouru du feuillard (1) dans une direction de transport (x) est mesuré en continu à l'aide d'un dispositif de mesure de déplacement (W) prévu en amont du dispositif de découpe laser.

9. Procédé selon l'une des revendications précédentes, en ce que les valeurs de trajet mesurées sont transmises au dispositif de commande et le trajet de coupe corrigé à l'aide du programme de commande est calculé en utilisant le trajet de coupe prédéfini pour la réalisation du contour (K) et les valeurs de trajet mesurées.

10. Procédé selon l'une des revendications précédentes, en ce que les premières et/ou les deuxièmes valeurs de distance mesurées et les valeurs de trajet mesurées à une distance de maximum 2 m, de préférence de maximum 1 m, sont saisies en amont du dispositif de découpe laser.

11. Procédé selon l'une des revendications précédentes, en ce que les premières et/ou les deuxièmes valeurs de distance mesurées et les valeurs de trajet mesurées approximativement à la même distance sont saisies en amont du dispositif de découpe laser.

12. Procédé selon l'une des revendications précédentes, en ce qu'au moins une des premières et/ou des deuxièmes valeurs de distance mesurées est utilisée comme grandeur réglée pour le réglage d'une position y d'un touret mobile dans une direction y, sur lequel le feuillard (1) est reçu comme bobine.

13. Procédé selon l'une des revendications précédentes, en ce qu'une troisième distance (I3) du premier bord du feuillard est mesurée en continu à partir d'un troisième point de mesure fixe dans une direction y à l'aide d'un troisième dispositif de mesure de distance (5).

14. Procédé selon l'une des revendications précédentes, en ce que le troisième dispositif de mesure de distance (5) est placé dans la zone ou en amont du dispositif de découpe laser.

15. Procédé selon l'une des revendications précédentes, en ce qu'une première coupe partielle de contour (K1) est réalisée à l'aide du dispositif de découpe laser, en ce qu'une deuxième coupe partielle de contour (K2) est réalisée à l'aide d'un autre dispositif de découpe laser prévu en amont du dispositif de découpe laser, et en ce qu'à l'aide du programme de commande un autre trajet de coupe prédéfini correspondant à la deuxième coupe partielle de contour (K2) est corrigé en utilisant au moins la première valeur de distance mesurée, de sorte que l'autre trajet de coupe s'engage dans une partie terminale du premier trajet de coupe.

16. Procédé selon l'une des revendications précédentes, en ce que le trajet de coupe et l'autre trajet de coupe sont corrigés de telle sorte qu'une position prédéfinie d'un point de transfert (E1, E2, E3, E4) reste inchangée à l'extrémité de la première coupe partielle de contour (K1).

17. Procédé selon l'une des revendications précédentes, en ce que le trajet de coupe est corrigé de telle sorte qu'un point de transfert (E1, E2, E3, E4) est corrigé à la fin du trajet de coupe en utilisant la première valeur de distance.

18. Procédé selon l'une des revendications précédentes, en ce que le/les dispositif(s) de mesure de distance (3, 4, 5) est/sont réajusté(s) dans une direction y par rapport au bord du feuillard de sorte que le bord du feuillard se trouve toujours dans sa/leur zone de mesure.
